# EUROPÄISCHE PATENTSCHRIFT

(11) **EP 1 923 160 B1**
(45) Veröffentlichungstag und Bekanntmachung des Hinweises auf die Patenterteilung: **31.03.2010**
(21) Anmeldenummer: 07021806.0
(22) Anmeldetag: 09.11.2007
(51) Int. Cl.: B23B 51/02, B28D 1/14

(54) **Bohrwerkzeug mit Hartstoffkopf**
Drill tool with hard material head
Outil de forage à tête dure

(30) Priorität: 15.11.2006 DE 102006035443
(43) Veröffentlichungstag der Anmeldung: 21.05.2008
(73) Patentinhaber: HILTI Aktiengesellschaft, 9494 Schaan (LI)
(72) Erfinder: Koch, Olaf, Kaufering 86916 (DE)
(74) Vertreter: Wildi, Roland

(56) Entgegenhaltungen:
- EP-A- 1 604 762
- WO-A-2005/061838

## Beschreibung

Die Erfindung bezeichnet ein Bohrwerkzeug mit einem Hartstoffkopf, insbesondere einen Schlagbohrmeissel für Gestein und armierten Beton zur Verwendung mit einer leistungsstarken Handwerkzeugmaschine.

Üblicherweise weisen derartige Bohrwerkzeuge einen sich axial zu einer Drehachse erstreckenden wendelförmigen Schaft auf, an dessen maschinenseitigem Schaftende ein Einsteckende zur Aufnahme in der Handwerkzeugmaschine und am gegenüberliegenden, werkstückseitigen Schaftende ein hart verlöteter Hartstoffkopf angeordnet ist.

Nach der W02005061838 ist ein Schlagbohrmeissel für Gestein mit einem einstückigen, Hartstoffkopf mit vier kreuzförmig angeordneten, in Drehrichtung konvex gekrümmten, Schneiden und einer Zentrierspitze bekannt.

Die Ep 160 47 62 offenbart einen Schlagbohrmeissel gemäß dem Oberbegriff des Anspruchs 1. Dieser Schlagbohrmeissel für Gestein mit einem stumpf aufgelöteten, einstückigen Hartstoffeinsatz weist vier kreuzförmig radial angeordnete Schenkel auf, welche zwei diametral gegenüberliegende gerade Hauptschneiden und zwei diametral gegenüberliegende, zur Drehrichtung konkav gekrümmte Nebenschneiden ausbilden. Die Nebenschneiden mit einer in Drehrichtung tangential geneigten Auflauffläche (zum maschinenseitig axialen Abheben des Schlagbohrmeissels bei einem Armierungseisentreffer) erstrecken sich ausschliesslich im radial äusseren Bereich. Ausschliesslich im radial inneren Zentrierbereich sind je zwei diametral gegenüberliegende Zentrierschneiden vorhanden, die axial linear zu einer von den Hauptschneiden ausgebildeten Bohrspitze verlaufen. Die radial innere Hüllfläche des Zentrierbereiches hat dabei einen spitzeren Dachkantenwinkel als die radial äussere Hüllfläche der Schenkel.

Die Aufgabe der Erfindung besteht in einer weiteren Verbesserung der Bohrleistung sowie der Robustheit gegenüber Armierungseisentreffern.

Die Aufgabe wird im Wesentlichen durch die Merkmale des Anspruchs 1 gelöst. Vorteilhafte Weiterbildungen ergeben sich aus den Unteransprüchen.

So weist ein um eine Drehachse zumindest teilweise drehend antreibbares Bohrwerkzeug einen wendelförmigen Schaft auf, an dessen axialem Schaftende ein einstückiger Hartstoffkopf stoffschlüssig befestigt ist, welcher vier, sich kreuzförmig radial erstreckende, Schenkel mit je zwei diametral gegenüberliegenden Hauptschneiden und Nebenschneiden aufweist, wobei die Hauptschneiden und die Nebenschneiden von einer Bohrerspitze ausgehend axial (d.h. nur bezüglich der axialen Komponente) streng monoton bis zum radial äusseren Rand verlaufen und die Hüllfläche der Nebenschneiden vollständig innerhalb der Hüllfläche der Hauptschneiden liegt und diese nur an der Bohrerspitze berührt.

Durch die vollständig innerhalb der Hüllfläche der Hauptschneiden liegende Hüllfläche der Nebenschneiden ist ein radial gemittelter Dachkantenwinkel der Nebenschneiden kleiner als der der Hauptschneiden, wodurch mit dem für die Bohrleistung wesentlichen äusseren Radialbereich die axiale Anpresskraft auf die Hauptschneiden konzentriert wird, wobei die Nebenschneiden zu deren Schutz bei Armierungseisentreffern dienen, und im inneren Zentralbereich durch alle vier Schneiden ein gutes Anbohr- und Führungsverhalten erzielt wird.

Vorteilhaft liegt eine Winkeldifferenz der radial gemittelten Dachkantenwinkel im Bereich zwischen 2° und 10°, wodurch optimale Bohrleistung und Robustheit erzielt wird.

Vorteilhaft verlaufen die Hauptschneiden und die Nebenschneiden axial linear, wodurch deren Hüllflächen exakt kegelig ausgebildet sind.

Vorteilhaft sind die Hauptschneiden in axialer Projektion von der Bohrerspitze ausgehend gerade ausgebildet, wodurch sie eine minimale Länge und somit bei gegebener Anpresskraft eine maximale Linienkraftdichte aufweisen.

Vorteilhaft sind die Nebenschneiden in axialer Projektion von der Bohrerspitze ausgehend zur nächstliegenden Hauptschneide (in Drehrichtung) konvex gekrümmt ausgebildet, wodurch das hauptsächlich von der (anderen, in Drehrichtung nachfolgenden) Hauptschneide abrasiv abgetragene Bohrklein besser in den wendelförmigen Schaft gefördert wird.

Vorteilhaft sind die Nebenschneiden in axialer Projektion von der Bohrerspitze ausgehend gleichförmig gekrümmt (d.h. mit einem konstanten Krümmungsradius), wodurch lokale Stellen starker Krümmung vermieden werden, an denen sich Bohrklein ablagern kann.

Vorteilhaft bildet der Schenkel der Hauptschneide am radial äusseren Rand drehrichtungsseitig eine tangential geneigte Auflauffläche aus, welche von der Hauptschneide axial beabstandet ist, wodurch an der Hauptschneide ebenfalls eine Auflauffläche ausgebildet wird, die insbesondere bei seitlichen Armierungseisentreffern ein Festfressen der Hauptschneidenecke im duktilen Armierungseisen verhindert.

Die Erfindung wird bezüglich eines vorteilhaften Ausführungsbeispiels näher erläutert mit:

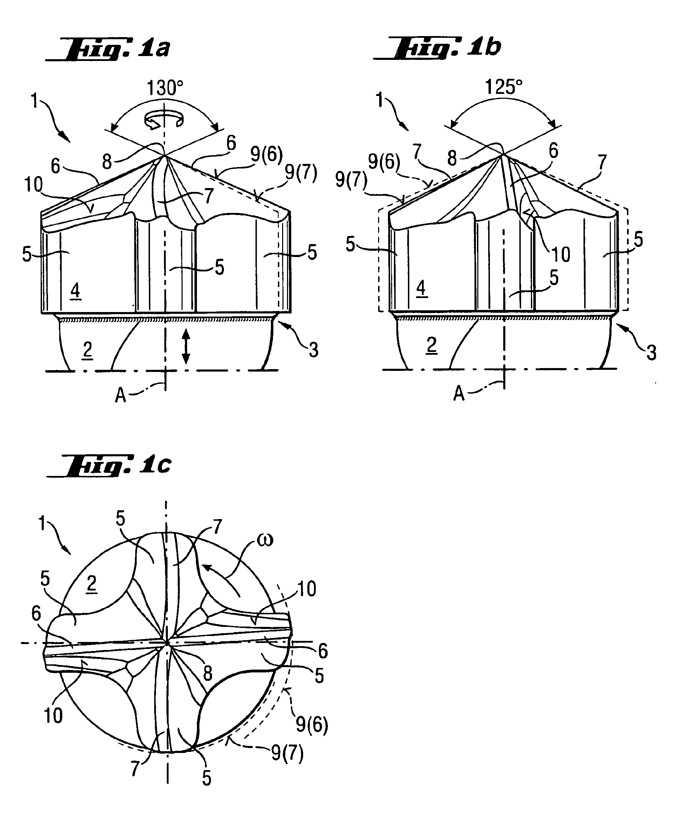

Fig. 1a, 1 b, 1 c als Bohrwerkzeug in Vorderansicht, Seitenansicht und Aufsicht

Nach den Fig. 1a, 1b und 1c weist ein um eine Drehachse A drehend und längs dieser schlagendes Bohrwerkzeug 1 einen wendelförmigen Schaft 2 auf, an dessen axialem Schaftende 3 ein einstückiger Hartstoffkopf 4 stumpf hart aufgelötet ist, welcher vier, sich kreuzförmig radial erstreckende, Schenkel 5 mit je zwei diametral gegenüberliegenden Hauptschneiden 6 und Nebenschneiden 7 aufweist, wobei die Hauptschneiden 6 und die Nebenschneiden 7 von einer Bohrerspitze 8 ausgehend axial linear bis zum radial äusseren Rand verlaufen und die Hüllfläche 9 der Nebenschneiden 7 vollständig innerhalb der Hüllfläche 9 der Hauptschneiden 6 liegt und diese nur an der Bohrerspitze 8 berührt. Die Winkeldifferenz von in die Kegelspitze eingeschriebenen Dachkantenwinkeln zwischen den Hüllflächen 9 beträgt 130° - 125° = 5°. Die Hauptschneiden 6 sind in axialer Projektion von der Bohrerspitze 8 ausgehend gerade ausgebildet und die Nebenschneiden 7 in Drehrichtung [omega] zur nächstliegenden Hauptschneide 6 gleichförmig konvex gekrümmt. Der Schenkel 5 der Hauptschneide 6 bildet am radial äusseren Rand drehrichtungsseitig eine tangential geneigte Auflauffläche 10 aus, welche von der Hauptschneide 6 axial beabstandet ist.

## Patentansprüche

1. Ein um eine Drehachse (A) zumindest teilweise drehend antreibbares Bohrwerkzeug mit einem wendelförmigen Schaft (2), an dessen axialem Schaftende (3) ein einstückiger Hartstoffkopf (4) stoffschlüssig befestigt ist, welcher vier, sich kreuzförmig radial erstreckende, Schenkel (5) mit je zwei diametral gegenüberliegenden Hauptschneiden (6) und Nebenschneiden (7) aufweist, **dadurch gekennzeichnet, dass** die Hauptschneiden (6) und die Nebenschneiden (7) von einer Bohrerspitze (8) ausgehend axial streng monoton bis zum radial äusseren Rand verlaufen und eine Hüllfläche (9) der Nebenschneiden (7) vollständig innerhalb der Hüllfläche (9) der Hauptschneiden (6) liegt und diese nur an der Bohrerspitze (8) berührt.

2. Bohrwerkzeug nach Anspruch 1, **dadurch gekennzeichnet, dass** eine Winkeldifferenz von radial gemittelten Dachkantenwinkeln der Hüllflächen (9) im Bereich zwischen 2° und 10° liegt.

3. Bohrwerkzeug nach Anspruch 1 oder 2, **dadurch gekennzeichnet, dass** die Hauptschneiden (6) und die Nebenschneiden (7) axial linear verlaufen.

4. Bohrwerkzeug nach einem der Ansprüche 1 bis 3, **dadurch gekennzeichnet, dass** die Hauptschneiden (6) in axialer Projektion von der Bohrerspitze (8) ausgehend gerade ausgebildet sind.

5. Bohrwerkzeug nach einem der Ansprüche 1 bis 4, **dadurch gekennzeichnet, dass** die Nebenschneiden (7) in axialer Projektion von der Bohrerspitze (8) ausgehend zur tangential nächstliegenden Hauptschneide (6) konvex gekrümmt ausgebildet sind.

6. Bohrwerkzeug nach Anspruch 5, **dadurch gekennzeichnet, dass** die Nebenschneiden (7) gleichförmig gekrümmt sind.

7. Bohrwerkzeug nach einem der Ansprüche 1 bis 6, **dadurch gekennzeichnet, dass** der Schenkel (5) der Hauptschneide (6) am radial äusseren Rand drehrichtungsseitig eine tangential geneigte Auflauffläche (10) ausbildet, welche von der Hauptschneide (6) axial beabstandet ist.

## Claims

1. A drilling tool which can be at least partially driven in rotation about an axis of rotation (A), comprising a helical shank (2) to the axial end (3) of which a one-piece hard-material head (4) is adhesively bonded, the said head having four flanks (5) extending radially in a cross-shaped manner and each comprising two diametrically opposing major cutting edges (6) and minor cutting edges (7), **characterised in that** the major cutting edges (6) and the minor cutting edges (7) extend axially strictly monotonically from a drill tip (8) to the radially outer edge and an enveloping surface (9) of the minor cutting edges (7) lies completely within the enveloping surface (9) of the major cutting edges (6) and contacts it only at the drill tip (8).

2. Drilling tool according to claim 1, **characterised by** an angular difference of radially averaged roof angles of the enveloping surfaces (9) in the range of between 2° and 10°.

3. Drilling tool according to claim 1 or claim 2, **characterised in that** the major cutting edges (6) and the minor cutting edges (7) extend in an axially linear manner.

4. Drilling tool according to one of claims 1 to 3, **characterised in that** the major cutting edges (6) depart in a straight line from the drill tip (8) in axial projection.

5. Drilling tool according to one of claims 1 to 4, **characterised in that** the minor cutting edges (7) extend in a convexly curved manner from the drill tip (8) to the tangentially closest major cutting edge (6) in axial projection.

6. Drilling tool according to claim 5, **characterised in that** the minor cutting edges (7) are uniformly curved.

7. Drilling tool according to one of claims 1 to 6, **characterised in that** the flank (5) of the major cutting edge (6) forms a tangentially inclined contact surface (10) on the radially outer edge on the side facing in the direction of rotation, said contact surface being axially spaced from the major cutting edge (6).

## Revendications

1. Foret entraîné au moins partiellement en rotation autour d'un axe de rotation (A), comprenant une tige hélicoïdale (2), à l'extrémité axiale (3) de laquelle est fixée par conjugaison de matières une tête en substance dure d'un seul tenant (4), laquelle comporte quatre branches (5) qui s'étendent radialement en croix et sont pourvues chacune de deux taillants principaux (6) et de deux taillants secondaires (7) diamétralement opposés, **caractérisé en ce que**, à partir d'une pointe de forage (8), les taillants principaux (6) et les taillants secondaires (7) s'étendent axialement de manière strictement monotone jusqu'au bord extérieur radial, et une surface enveloppante (9) des taillants secondaires (7) se trouve entièrement à l'intérieur de la surface enveloppante (9) des taillants principaux (6) et ne rencontre celle-ci qu'au niveau de la pointe de forage (8).

2. Foret selon la revendication 1, **caractérisé en ce qu'**un écart angulaire entre des angles moyens radiaux d'arête de faîte des surfaces enveloppantes (9) est compris entre 2° et 10°.

3. Foret selon la revendication 1 ou 2, **caractérisé en ce que** les taillants principaux (6) et les taillants secondaires (7) s'étendent de manière linéaire axiale.

4. Foret selon une des revendications 1 à 3, **caractérisé en ce que**, en projection axiale, les taillants principaux (6) sont rectilignes à partir de la pointe de forage (8).

5. Foret selon une des revendications 1 à 4, **caractérisé en ce que**, en projection axiale, les taillants secondaires (7) présentent, depuis la pointe de forage (8), une courbure convexe vers le taillant principal tangentiellement le plus proche (6).

6. Foret selon la revendication 5, **caractérisé en ce que** les taillants secondaires (7) présentent une courbure de forme identique.

7. Foret selon une des revendications 1 à 6, **caractérisé en ce que**, sur son bord extérieur radial, la branche (5) du taillant principal (6) comporte, du côté tourné dans le sens de rotation, une surface ascendante inclinée tangentiellement (10) qui est distante du taillant principal (6).
